# EUROPEAN PATENT SPECIFICATION

(11) **EP 3 890 059 B1**
(45) Date of publication and mention of the grant of the patent: **07.06.2023**
(21) Application number: 20167179.9
(22) Date of filing: 31.03.2020
(51) Int. Cl.: B60L 58/10, H01M 10/42, H02J 7/00, B60L 1/00, B60L 58/20, H01M 50/204, H01M 50/249, H01M 50/574

(54) **AN ELECTRIC-VEHICLE BATTERY SYSTEM COMPRISING A REAL TIME CLOCK**
BATTERIESYSTEM MIT EINER ECHTZEITUHR FÜR EIN ELEKTROFAHRZEUG
SYSTÈME DE BATTERIE DE VÉHICULE ÉLECTRIQUE COMPRENANT UNE HORLOGE EN TEMPS RÉEL

(43) Date of publication of application: 06.10.2021
(73) Proprietor: Samsung SDI Co., Ltd., Gyeonggi-do 17084 (KR)
(72) Inventor: Hofer, Maximilian, 8230 Hartberg (AT); Schmiedhofer, Christoph, 8020 Graz (AT); Trathnigg, Thomas, 8010 Graz (AT); Duller, Kurt, 8010 Graz (AT); Mandic, Renato, 8010 Graz (AT); Damir, Kovac, 8220 Graz (AT)
(74) Representative: Gulde & Partner

(56) References cited:
- WO-A2-2011/126909
- US-A1- 2017 361 791
- US-A1- 2018 186 241

## Description

### Field of the Invention

The present invention relates to an electric-vehicle battery system comprising a real time clock, RTC. The present invention further refers to an electric vehicle including the electric-vehicle battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually comprise a battery system manager, BSM, for obtaining and processing such information on system level and further a plurality of battery module managers, BMMs, which are part of the system's battery modules and obtain and process relevant information on system level. Particularly, the BSM usually measures the system voltage, the system current, the local temperature at different places inside the system housing, and the insulation resistance between live components and the system housing. Additionally, the BMMs usually measure individual the cell voltages and the temperatures of the battery modules.

In case of an abnormal operation state, a battery pack shall usually be disconnected from a load connected to a terminal of the battery pack. Therefore, battery systems further comprise a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

Various control and communication processes regarding the BSM, its constituents or the electric consumers are time dependent processes. Monitoring and controlling the charging of battery cells might e.g. require the determination of the rate of change of the state of charge. Further, also in idle periods of the electric consumers, i.e. in periods of minimal load, various parameters, e.g. battery voltages and internal resistances, must be periodically controlled during wake up periods to avoid a system failure, e.g. due to a thermal runaway or short circuits of individual cells. In order to provide a time scale, e.g. for the wake up, the control electronics, i.e. BSM of the battery system comprise a real time clock, RTC.

The RTC is usually provided as an integrated circuit, IC, and may comprise a crystal oscillator or may use the power line frequency for deriving the time scale. The RTC must be continuously energized in order to keep track of running time and may further comprise a volatile or nonvolatile memory in order to keep time related information such as calendar date. For security reasons an alternate power source, e.g. a lithium button cell battery or a capacitor, might be provided additionally to a primary power source.

In battery systems of BEVs of the state of art, the 12V/24V board net supplies the RTC. However, if there is a loss of this domain, there is also loss of the time. Furthermore, a low-dropout regulator, LDO, is frequently used for supplying the RTC since, for example, a 12V domain has a very wide input range, starting from low volt (approximately about 3V) up to load dump voltage of more than 30V. An LDO is an active linear voltage regulator that dissipates power in order to regulate the output voltage. Hence, the power consumption of an LDO is high. This is disadvantageous particularly with respect to the extended idle times of electric vehicles. Further, the purchase costs for commercial LDOs are high.

It is thus an object of the present invention to provide an alternative power supply for the RTC of a battery system. Thereby, the power supply shall decrease the power consumption of the battery system, especially during idle periods, while guaranteeing a secure power supply of the RTC during all operational states of the battery system and/or the RTC. Further, production costs of the battery system shall be decreased.

US 2018/0186241 A1 describes a utility vehicle empowered by a lithium battery system. The lithium battery system includes a battery management system, BMS, and a lithium battery. The BMS comprises a power delivery interface, a lithium battery interface, a wakeup circuit, a contactor, and a charge regulation circuit. The wakeup circuit includes control logic and a timer which operate to manage access to the lithium battery.

### Summary of Invention

One or more of the drawbacks of the prior art could be avoided or at least reduced by means of the present disclosure. In particular, the present disclosure refers to an electric-vehicle battery system as defined in claim 1 and comprising:
a high voltage system, HV system, with a plurality of connected rechargeable battery cells;
a low voltage system, LV system, with an operating voltage lower than an operating voltage of the HV system, wherein the LV system is configured to supply a battery system manager, BSM; and
a real time clock, RTC, configured for providing a system time to the BSM.

The RTC is located in the LV system and is at least temporarily powered by the HV system.

The electric-vehicle battery system further comprises a battery disconnect unit, BDU, comprising BDU relays to switchably open or close an HV line of the HV system and a BDU control unit adapted to control the BDU relays, wherein the BDU is adapted to exchange data with the BSM via a communication interface.

The RTC is integrated into the BDU.

The BDU may comprise a high-voltage section, HV section, including the BDU relays, and a low-voltage section, LV section, including the BDU control unit; and the RTC may be arranged on the LV section of the BDU. The LV section and the HV section may be separated by galvanic isolation from each other.

The BDU further includes an RTC voltage supply unit configured for receiving an input voltage from the HV system and providing a supply voltage at an output of the RTC voltage supply unit, wherein the RTC is electrically connected to and configured for drawing power from the output of the RTC voltage supply unit.

The BDU control unit is configured to operate the RTC voltage supply unit such that the RTC voltage supply unit is inactive in a first operation state of the battery system and active in a second operation state of the battery system.

The RTC may be further configured for receiving a supply voltage from the LV system and the RTC, wherein the RTC is powered by the LV system in the first operation state of the battery system and powered by the HV system in the second operation state of the battery system. The RTC voltage supply unit may include a voltage divider configured for converting the input voltage from the HV system into the supply voltage.

According to another aspect of the disclosure there is provided an electric vehicle including the above mentioned electric-vehicle battery system.

Further aspects of the present invention are disclosed in the following description of the drawings.

### Brief Description of the Drawings

Features will become apparent to those of ordinary skill in the art by describing in detail an exemplary embodiment with reference to the attached drawing in which:

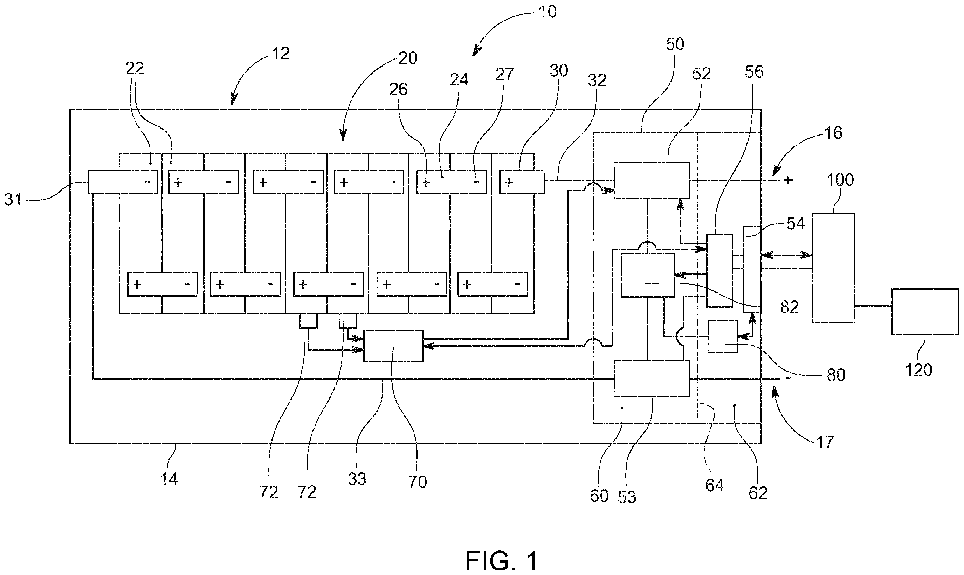

Fig. 1 schematically illustrates a battery system according to an embodiment of the present disclosure.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

Fig. 1 is a top view illustrating an electric-vehicle battery system 10 according to an embodiment, for the ease of readability, the electric-vehicle battery system 10 is further referred to as the battery system 10. It is to be noted, that the Fig. 1 is meant to provide a better understandability of the battery system 10 of the present disclosure, especially the electrical connection between a battery module 20, a battery disconnect unit, BDU 50, and a battery system manager, BSM 100, of the battery system 10. The battery system 10 is utilized in an electric vehicle.

The battery system 10 comprises a battery pack 12 including a housing 14. The housing 14 may be assembled from several parts, such as a bottom plate comprising the lateral walls and a top cover and shall. The housing 14 serves to accommodate the individual components of the battery pack 12. These components may include parts of a cooling system, sensors to detect the temperature and other operating conditions of the battery pack 12, at lest one battery module 20 and control units for controlling the operating conditions of the battery pack 12. For the sake of simplification, the following description is limited to those components of the battery pack 12 which are essential in connection with the present disclosure.

Basically, the battery system 10 comprises a high voltage system, HV system, as well as a low voltage system, LV system. In the HV system there is a voltage that is higher than the voltage in the LV system. In particular, the HV system comprises the battery module 20 as a voltage source and all conductive components of the battery pack 12 connected to the battery module 20 up to the positive and negative system terminals 16, 17. An electric motor for propulsion of the electric vehicle including the battery pack 12 will be connected to the system terminals 16, 17.

The HV system includes the battery module 20 as high voltage source. As shown in the exemplary embodiment of Fig. 1, the battery module 20 comprises ten aligned battery cells 22 that are stacked in a stacking direction with their wide side surfaces facing each other. The battery cells 22 of the battery module 20 are connected to each other via busbars 24 in serial configuration. Therefore, each busbar 24 connects one positive cell terminal 26 and one negative cell terminal 27 to each other. The plurality of battery cells 22 are interconnected by means of the respective busbars 24 between negative and positive module terminals 30 and 31. Usually, battery packs 12 for electric vehicles include a plurality of battery modules, but for purpose of illustration the exemplary embodiment includes only one battery module 20.

The battery module 20 is connected via the high-voltage lines 32, 33 with the BDU 50. Each battery module 20 may further include a battery module manager, BMM 70, for obtaining and processing relevant information such as cell voltages (voltage measurement means not shown) and cell temperatures (measured for example via temperature sensors 72) of the battery cells 22. The BMM 70 may also allow balancing charge of the single battery cells 22 of the battery module 20.

In case of an abnormal operation state, the battery pack 12 shall usually be disconnected from a load connected to the system terminal 16, 17. Therefore, battery system 10 further comprises the battery disconnect unit, BDU 50, that is electrically connected between the battery module 20 and battery system terminals 16, 17. Thus, the BDU 50 is the primary interface between the battery pack 12 and the electrical system of the vehicle. The BDU 50 includes BDU relays 52, 53 in particular electromechanical switches that open or close the high current paths between the battery pack 12 and the electrical system. Such electrochemical switches may include solid-state relays, SSRs. Thus, the high-voltage lines 32, 33 of the battery module 20 are switchable connected with the system terminals 16, 17 via the BDU relays 52, 53. The BDU 50 may include further safety circuits and electronic components like fuses. In the concrete design of the BDU 50 and its components, the skilled person may orientate himself on the state of the art.

According to the exemplary embodiment, a BDU control unit 56 is connected via low current lines with the BDU relays 52, 53 so as to allow switching of the BDU relays 52, 53. The BDU control unit 56 is further connected with the BMM 70 via a low current line. In addition, the BDU 50 comprises a communication interface 54 (e.g. serial peripheral interface, SPI) for synchronous communication between the BDU control unit 56 and the BSM 100.

Here, the BDU 50 provides feedback to the BMM 70 accompanied to the battery module 20 such as voltage and current measurements. The BMM 70 may control the electrochemical switches in the BDU 50 via the BDU control unit 56. The main functions of the BDU 50 may thus include controlling current flow between the battery pack 12 and the electrical system and current sensing.

The BDU 50 may further manage additional functions like external charging and pre-charging, which may be initiated by the BSM 100. Particularly, the BDU control unit 56 is configured to receive a signal indicative of a malfunction of the battery system 10 and/or indicating that disconnecting the battery module 20 from a load is required. In response to receiving such signal, the BDU control unit 56 is further configured to control the further BDU relays 52, 53 to disconnect the battery module 20 from the respective system terminal 16, 17 (and consequently a downstream load). In other words, the BDU 50 is electrically connected to and selectively closing the electric path between the module terminals 31, 32 and the battery system terminals 16, 17. Thus, the BDU 50 may be adapted to exchange data via the communication interface 54 with the BSM 100. For example, in case the BSM 100 determines the presence of an abnormal condition in the battery system 10 and the BSM 100 may perform or control to perform at least one countermeasure associated with the determined abnormal condition, such as e.g. transmit a warning signal to the vehicle's driver. Particularly, the BSM 100 may transmit a disconnect signal to the BDU control unit 56 that, in response to receiving the disconnect signal, controls the BDU relays 52, 53 to disconnect the system terminals 16, 17 from the module terminals 31, 32, respectively.

The LV system is used to supply power to connected low-voltage consumer components, which include among others control units of the electric vehicle such as the BMS 100 as well as the BDU control unit 56. The LV system may further include signal lines or other low-voltage wiring of the battery system 10. The LV system may comprise a low-voltage battery 120 of the electric vehicle as a voltage source and may be a part of the on-board power supply.

The BDU components of the HV system are provided in a HV section 60 of the BDU 50, whereas the BDU components of the LV system are arranged in an LV section 62. The HV section 60 and the LV section 62 are divided by galvanic isolation which is indicated by the doted line 64. The communication interface 54 and the BDU control unit 56 are part of the LV section 62.

Various control and communication processes regarding the BSM 100, its constituents or the electric consumers are time dependent processes. Monitoring and controlling the charging of battery cells 20 might e.g. require the determination of the rate of change of the state of charge. Further, also in idle periods of the electric consumers, i.e. in periods of minimal load, various parameters, e.g. battery voltages and internal resistances, must be periodically controlled during wake up periods to avoid a system failure, e.g. due to a thermal runaway or short circuits of individual battery cells 20. In order to provide a time scale, e.g. for the wake up, the control electronics, i.e. BSM 100 of the battery system 10 comprise a real time clock, RTC 80. Here, the RTC 80 is provided on the LV section 62 of the BDU 50 and may transmit a time signal via the communication interface 54 to the BSM 100, i.e. the RTC 80 provides a system time to the BSM 100. The RTC 80 may be an integrated circuit providing the functionality of a common RTC. Thus, the RTC 80 is integrated into the BDU 50, wherein the RTC 80 is arranged on the LV section 62 of the BDU 50. The RTC 80 is able to provide the system time to the BSM 100 via the communication interface 54 of the BDU 50.

The BDU 50 is further adapted such that the RTC 80 is at least temporarily powered by the HV system. Therefore, the BDU 50 may include an RTC voltage supply unit 82 configured for receiving an input voltage from the HV system and providing a supply voltage at an output of the RTC voltage supply unit 82. The RTC 80 is electrically connected to and configured for drawing power from the output of the RTC voltage supply unit 82. Thereby, a secure power supply of the RTC 80 during all operational states of the battery system 10 is ensured.

In particular, the BDU control unit 56 may be configured to operate the RTC voltage supply unit 82 such that the RTC voltage supply unit 82 is inactive in a first operation state of the battery system 10 and active in a second operation state of the battery system 10. The RTC 80 may be further configured for receiving a supply voltage from the LV system and the RTC (80), wherein the RTC 80 is powered by the LV system in the first operation state of the battery system 10 and powered by the HV system in the second operation state of the battery system 10. The RTC voltage supply unit 82 may include a voltage divider configured for converting the input voltage from the HV system into the supply voltage.

In other words, the RTC voltage supply unit 82 is configured to be inactive in a first operation state of the battery system 10 and active in a second operation state of the battery system 10. The second operation state of the battery system 10 is an idle or sleep mode of the battery system 10, whereas the first operation state is an active state of the battery system 10. The active state of the battery system 10 might occur during charging or while providing power to a load. The active state is characterized in that the LV system provides the supply voltage for the RTC 80. Therefore, the RTC 80 is enabled to draw power for example via BSM 100 in the first operation state.

In the second operation state the RTC 80 can draw power from the HV system via the RTC voltage supply unit 82. Thus, power demand of the RTC 80 can be met in both operation states even without active switching in the power supply circuit of the RTC 80. The RTC 80 will able to provide a continuous system time to the BSM 100 when the battery system 10 returns to the first operation state.

In order to adapt the input voltage of the HV system to supply voltage, which is of a lower value as per the power requirements of the RTC 80, the RTC voltage supply unit 82 may include a voltage divider (not shown in figures). Such a voltage divider may be configured for converting the input voltage from the module terminals 31, 32 into the supply voltage of the RTC 80. For example, passive elements may be used to adapt the output input voltage of the RTC voltage supply unit 82. In particular, ohmic resistances and/or diodes may be used to lower the input voltage from the battery module 20. Due to the small currents drawn by the RTC 80, the voltage drop over these passive elements can be set to be minimal.

The RTC 80 draws power from the LV system of the battery system 22 in the first operation state and draws power from the HV system via the RTC voltage supply unit 82 during the second operation state. Thus, the power demand of the RTC 80 can be met in both operation states.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

## Claims

1. An electric-vehicle battery system (10) comprising:
a high voltage system, HV system, with a plurality of connected rechargeable battery cells (20);
a low voltage system, LV system, with an operating voltage lower than an operating voltage of the HV system, wherein the LV system is configured to supply a battery system manager, BSM (100);
a real time clock, RTC (80), configured for providing a system time to the BSM (100), wherein the RTC (80) is located in the LV system and is at least temporarily powered by the HV system; and
a battery disconnect unit, BDU (50), comprising BDU relays (52, 53) to switchably open or close an HV line of the HV system and a BDU control unit (56) adapted to control the BDU relays (52, 53), wherein the BDU (50) is adapted to exchange data with the BSM (100) via a communication interface (54), wherein the RTC (80) is integrated into the BDU (50),
wherein the BDU (50) includes an RTC voltage supply unit (82) configured for receiving an input voltage from the HV system and providing a supply voltage at an output of the RTC voltage supply unit (82) and wherein the RTC (80) is electrically connected to and configured for drawing power from the output of the RTC voltage supply unit (82),
wherein the BDU control unit (56) is configured to operate the RTC voltage supply unit (82) such that the RTC voltage supply unit (82) is inactive in a first operation state of the battery system (10) and active in a second operation state of the battery system (10).

2. The electric-vehicle battery system of claim 1, wherein the BDU (50) comprises a high-voltage section, HV section (60), including the BDU relays (52, 53), and a low-voltage section, LV section (62), including the BDU control unit (56); and
wherein the RTC (80) is arranged on the LV section (62) of the BDU (50).

3. The electric-vehicle battery system of claim 2, wherein the LV section (62) and the HV section (60) are separated by galvanic isolation from each other.

4. The electric-vehicle battery system of claim 1, wherein the RTC voltage supply unit (82) includes a voltage divider configured for converting the input voltage from the HV system into the supply voltage.

5. Electric vehicle including an electric-vehicle battery system according to one of the preceding claims.

## Patentansprüche

1. Batteriesystem (10) für ein Elektrofahrzeug, das Folgendes umfasst:
ein Hochspannungssystem, HV-System, mit einer Vielzahl von verbundenen wiederaufladbaren Batteriezellen (20);
ein Niederspannungssystem, LV-System, mit einer Betriebsspannung, die niedriger als eine Betriebsspannung des HV-Systems ist, wobei das LV-System konfiguriert ist, um einen Batteriesystemmanager, BSM (100), zu versorgen;
eine Echtzeituhr, RTC (80), die konfiguriert ist zum Bereitstellen einer Systemzeit für den BSM (100), wobei die RTC (80) in dem LV-System angeordnet ist und zumindest zeitweise von dem HV-System versorgt wird; und
eine Batterietrenneinheit, BDU (50), die BDU-Relais (52, 53) zum schaltbaren Öffnen oder Schließen einer HV-Leitung des HV-Systems und eine BDU-Steuereinheit (56), die angepasst ist, um die BDU-Relais (52, 53) zu steuern, umfasst, wobei die BDU (50) angepasst ist, um Daten mit dem BSM (100) über eine Kommunikationsschnittstelle (54) auszutauschen, wobei die RTC (80) in die BDU (50) integriert ist,
wobei die BDU (50) eine RTC-Spannungsversorgungseinheit (82) enthält, die zum Empfangen einer Eingangsspannung von dem HV-System und zum Bereitstellen einer Versorgungsspannung an einem Ausgang der RTC-Spannungsversorgungseinheit (82) konfiguriert ist, und wobei die RTC (80) elektrisch mit dem Ausgang der RTC-Spannungsversorgungseinheit (82) verbunden und zum Beziehen von Energie von diesem konfiguriert ist,
wobei die BDU-Steuereinheit (56) konfiguriert ist, um die RTC-Spannungsversorgungseinheit (82) so zu betreiben, dass die RTC-Spannungsversorgungseinheit (82) in einem ersten Betriebszustand des Batteriesystems (10) inaktiv und in einem zweiten Betriebszustand des Batteriesystems (10) aktiv ist.

2. Batteriesystem für ein Elektrofahrzeug nach Anspruch 1, wobei die BDU (50) einen Hochspannungsabschnitt, HV-Abschnitt (60), der die BDU-Relais (52, 53) enthält, und einen Niederspannungsabschnitt, LV-Abschnitt (62), der die BDU-Steuereinheit (56) enthält, umfasst; und
wobei die RTC (80) auf dem LV-Abschnitt (62) der BDU (50) angeordnet ist.

3. Batteriesystem für ein Elektrofahrzeug nach Anspruch 2, wobei der LV-Abschnitt (62) und der HV-Abschnitt (60) durch galvanische Trennung voneinander getrennt sind.

4. Batteriesystem für ein Elektrofahrzeug nach Anspruch 1, wobei die RTC-Spannungsversorgungseinheit (82) einen Spannungsteiler enthält, der zum Umwandeln der Eingangsspannung vom HV-System in die Versorgungsspannung konfiguriert ist.

5. Elektrofahrzeug, umfassend ein Batteriesystem für ein Elektrofahrzeug nach einem der vorhergehenden Ansprüche.

## Revendications

1. Système de batterie (10) de véhicule électrique comprenant :
un système haute tension, système HV, avec une pluralité d'éléments de batterie d'accumulateurs reliés (20) ;
un système basse tension, système LV, avec une tension de fonctionnement inférieure à une tension de fonctionnement du système HV, où le système LV est configuré pour alimenter un gestionnaire de système de batterie, BSM (100) ;
une horloge temps réel, RTC (80), configurée pour fournir une heure de système au BSM (100), où la RTC (80) est située dans le système LV et est au moins temporairement alimentée par le système HV ; et
une unité de déconnexion de batterie, BDU (50), comprenant des relais BDU (52, 53) pour ouvrir ou fermer de façon commutable une ligne HV du système HV et une unité de commande BDU (56) conçue pour commander les relais BDU (52, 53), où la BDU (50) est conçue pour échanger des données avec le BSM (100) via une interface de communication (54), où la RTC (80) est intégrée dans la BDU (50),
dans lequel la BDU (50) inclut une unité d'alimentation en tension RTC (82) configurée pour recevoir une tension d'entrée depuis le système HV et fournir une tension d'alimentation au niveau d'une sortie de l'unité d'alimentation en tension RTC (82) et dans lequel la RTC (80) est électriquement reliée à et configurée pour tirer de l'énergie depuis la sortie de l'unité d'alimentation en tension RTC (82),
dans lequel l'unité de commande BDU (56) est configurée pour faire fonctionner l'unité d'alimentation en tension RTC (82) de sorte que l'unité d'alimentation en tension RTC (82) soit inactive dans un premier état de fonctionnement du système de batterie (10) et active dans un second état de fonctionnement du système de batterie (10).

2. Système de batterie de véhicule électrique selon la revendication 1, dans lequel la BDU (50) comprend une section haute tension, section HV (60), incluant les relais BDU (52, 53), et une section basse tension, section LV (62), incluant l'unité de commande BDU (56) ; et
dans lequel la RTC (80) est agencée sur la section LV (62) de la BDU (50).

3. Système de batterie de véhicule électrique selon la revendication 2, dans lequel la section LV (62) et la section HV (60) sont séparées l'une de l'autre par une isolation galvanique.

4. Système de batterie de véhicule électrique selon la revendication 1, dans lequel l'unité d'alimentation en tension RTC (82) inclut un diviseur de tension configuré pour convertir la tension d'entrée depuis le système HV en la tension d'alimentation.

5. Véhicule électrique incluant un système de batterie de véhicule électrique selon l'une des revendications précédentes.
